(19) Europäisches Patentamt
European Patent Office
Office européen des brevets

(11) **EP 1 966 630 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **06828708.5**

(22) Anmeldetag: **20.12.2006**

(51) Int Cl.:
***G01S 13/90*** (2006.01)

(86) Internationale Anmeldenummer:
**PCT/DE2006/002279**

(87) Internationale Veröffentlichungsnummer:
**WO 2007/076824 (12.07.2007 Gazette 2007/28)**

(54) **HOCHAUFLÖSENDE SYNTHETIK-APERTUR-RADARVORRICHTUNG UND ANTENNE FÜR EINE HOCHAUFLÖSENDE SYNTHETIK-APERTUR-RADARVORRICHTUNG**

HIGH-RESOLUTION SYNTHETIC APERTURE RADAR DEVICE AND ANTENNA FOR ONE SUCH RADAR DEVICE

DISPOSITIF RADAR À OUVERTURE SYNTHETIQUE HAUTE RÉSOLUTION, ET ANTENNE POUR UN TEL DISPOSITIF RADAR

(84) Benannte Vertragsstaaten:
**DE ES FR GB IT**

(30) Priorität: **22.12.2005 DE 102005062031**

(43) Veröffentlichungstag der Anmeldung:
**10.09.2008 Patentblatt 2008/37**

(73) Patentinhaber: **Airbus DS GmbH**
**82024 Taufkirchen (DE)**

(72) Erfinder:
• **GRAFMÜLLER, Bernhard**
**88677 Markorf (DE)**
• **SCHAEFER, Christoph**
**88048 Friedrichshafen (DE)**

(74) Vertreter: **Frenkel, Matthias Alexander et al**
**Wuesthoff & Wuesthoff**
**Patentanwälte PartG mbB**
**Schweigerstrasse 2**
**81541 München (DE)**

(56) Entgegenhaltungen:
EP-A- 1 134 592     EP-A- 1 471 600
EP-A1- 1 241 487    EP-A2- 0 389 111
DE-A1- 19 929 143   US-B1- 6 400 306

• **LEGG J A ET AL: "A SAR moving target ambiguity function" FOURTH INTERNATIONAL SYMPOSIUM ON SIGNAL PROCESSING AND ITS APPLICATIONS. ISSPA 96. PROCEEDINGS MAIN SYMPOSIUM QUEENSLAND UNIV. TECHNOL BRISBANE, QLD., AUSTRALIA, Bd. 2, 1996, Seiten 841-844 vol.2, XP010241117 ISBN: 1-86435-210-8**
• **MOBLEY S G ET AL: "Synthetic aperture radar with a non-uniform pulse repetition interval" SYSTEM THEORY, 1995., PROCEEDINGS OF THE TWENTY-SEVENTH SOUTHEASTERN SYMPOSIUM ON STARKVILLE, MS, USA 12-14 MARCH 1995, LOS ALAMITOS, CA, USA,IEEE COMPUT. SOC, 12. März 1995 (1995-03-12), Seiten 498-502, XP010134436 ISBN: 0-8186-6985-3**
• **KRIEGER G ET AL: "Unambiguous SAR signal reconstruction from nonuniform displaced phase center sampling" IEEE GEOSCIENCE AND REMOTE SENSING LETTERS IEEE USA, Bd. 1, Nr. 4, Oktober 2004 (2004-10), Seiten 260-264, XP002429466 ISSN: 1545-598X in der Anmeldung erwähnt**
• **BERTONI R ET AL: "Data compression device for SAR application" GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRETATION., INTERNATIONAL PASADENA, CA, USA 8-12 AUG. 1994, NEW YORK, NY, USA,IEEE, US, Bd. 4, 8. August 1994 (1994-08-08), Seiten 2194-2196, XP010138739 ISBN: 0-7803-1497-2**

- ZHENFANG LI ET AL: "Generation of wide-swath and high-resolution SAR images from multichannel small spaceborne SAR systems" IEEE GEOSCIENCE AND REMOTE SENSING LETTERS IEEE USA, Bd. 2, Nr. 1, Januar 2005 (2005-01), Seiten 82-86, XP002429467 ISSN: 1545-598X
- BLISS D W ET AL INSTITUTE OF ELECTRICAL AND ELECTRONICS ENGINEERS: "Multiple-input multiple-output (MIMO) radar and imaging: degrees of freedom and resolution" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, Bd. VOL. 1 OF 2. CONF. 37, 9. November 2003 (2003-11-09), Seiten 54-59, XP010701593 ISBN: 0-7803-8104-1
- JORDAN R L ET AL: "THE SIR-C/X-SAR SYNTHETIC APERTURE RADAR SYSTEM" PROCEEDINGS OF THE IEEE, IEEE. NEW YORK, US, Bd. 79, Nr. 6, 1. Juni 1991 (1991-06-01), Seiten 827-838, XP000262356 ISSN: 0018-9219
- LOMBARDO P: "A multichannel spaceborne radar for the COSMO-skymed satellite constellation" AEROSPACE CONFERENCE, 2004. PROCEEDINGS. 2004 IEEE BIG SKY, MT, USA 6-13 MARCH 2004, PISCATAWAY, NJ, USA,IEEE, US, 6. März 2004 (2004-03-06), Seiten 111-119, XP010747971 ISBN: 0-7803-8155-6

**Beschreibung**

Die Erfindung betrifft eine hochauflösende Synthetik-Apertur-Radarvorrichtung gemäß Anspruch 1 und eine Antenne für eine hochauflösende Synthetik-Apertur-Radarvorrichtung gemäß Anspruch 11.

Beim Synthetik-Apertur-Radar (SAR) wird ein Objekt wie beispielsweise die Erdoberfläche mittels einer kurzen bewegten Antenne abgetastet, über die Impulssignale, d.h. Impulse in einem definierten Zeitabstand ausgesandt und die Echosignale, also die an abgetasteten Objekten reflektierten Impulssignale empfangen werden. Die Bewegungsrichtung der kurzen Antenne wird auch als Azimut oder along track bezeichnet. Für jeden von der Antenne ausgeleuchteten und abgetasteten Bereich wird von einem SAR-Prozessor durch entsprechende Datenverarbeitung der Echosignale eine Abbildung des abgetasteten Objekts berechnet. SAR-Systeme werden beispielsweise zur Vermessung und Abbildung der Erdoberfläche mittels Satelliten eingesetzt.

Wesentliche Parameter beim SAR sind die Azimutauflösung, die Streifenbreite der Abtastung und die geometrische Auflösung in Entfernungsrichtung (range). Maßgebend für die geometrische Auflösung ist die Bandbreite der ausgesendeten Impulssignale. Die Impulsfolgefrequenz (PRF: pulse repition frequency) bestimmt die Abtastrate. Bei herkömmlichen SAR-Systemen sind die kleinste Azimutauflösung (along track) und die größte Streifenbreite (across track), die gleichzeitig erzielbar sind, dadurch miteinander verkoppelt, dass für eine hohe Azimutauflösung eine hohe, für eine große Streifenbreite dagegen eine niedrige PRF benötigt wird. Mit anderen Worten bedingt also beim herkömmlichen SAR eine hohe Azimutauflösung eine kleine Streifenbreite.

Dieser Konflikt kann durch ein so genanntes High-Resolution Wide-Swath (HRWS)-SAR aufgelöst werden, wie es beispielsweise aus der EP 1 241 487 A1 bekannt ist, Das HRWS-SAR wird mit zusätzliche Receive (RX)-Antennen bzw -Aperturen, d.h. mehreren, insbesondere drei Azimutaperturen betrieben, was eine Absenkung der PRF ohne Reduktion der Azimutauflösung ermöglicht. Ferner wird das Instrument bistatisch betrieben, d.h. mit separaten Sende (TX)- und Empfangs (RX)-Antennen. Die Elevation, d.h. die Abmessung in Querrichtung zur Azimutrichtung derTX-Antenne wird reduziert, um eine große Streifenbreite auszuleuchten, und die Elevation der RX-Antenne entsprechend erhöht, um die Sensitivität des Instruments aufrecht zu erhalten. Schließlich ist jede Azimutapertur in mehrere Subaperturen unterteilt, um mittels Digital Beam Forming (DBF) einen breiten Streifen abtasten zu können. Ein Nachteil des HRWS-SAR besteht jedoch in den großen Antennen, welche insbesondere beim Satelliten-basierten SAR zu schweren und damit auch teuren Nutzlasten führen.

LEGG J A ET AL: "A SAR moving target ambiguity function" FOURTH INTERNATIONAL SYMPOSIUM ON SIGNAL PROCESSING AND ITS APPLICATIONS. ISSPA 96. PROCEEDINGS MAIN SYMPOSIUM QUEENSLAND UNIV. TECHNOL BRISBANE, QLD., AUSTRALIA, Bd. 2, 1996, Seiten 841-844 vol.2, XP010241117 ISBN: 1-86435-210-8, schlägt vor, ein ungleichmässiges Pulswiderholungsintervall zu verwenden, um bei einem SAR eine eindeutige Bestimmung der Geschwindigkeit eines sich bewegenden zweidimensionalen Ziels zu ermöglichen. Die EP 1 134 592 A1 beschreibt einen Realzeit STAP-Filter zur Festzielunterdrückung für Radar-Rohdaten. Die DE 199 29 143 A1 beschreibt ein hochauflösendes SAR-System mit mehreren SAR-Satelliten, die sich in einer vorgesehenen Formation bewegen und in vorgesehenem Abstand zueinander angeordnet sind. BLISS D W ET AL INSTITUTE OF ELECTRICAL AND ELECTRONICS ENGINEEPS: "Multiple-input multiple-output (MIMO) radar and imaging; degrees of freedom and resolution" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, Bd. VOL. 1 OF 2. CONF. 31, 9. November 2003 (2003-11-09), Seiten 54-59, XP010701593 ISBN: 0-7803-8104-1, diskutiert Radar im Kontext eines Multiple-Input Multiple-Output (MIMO) Systemmodells. JORDAN R L ET AL: "THE SIR-C/X-SAR SYNTHETIC APERTURE RADAR SYSTEM" PROCEEDINGS OF THE IEEE, IEEE. NEW YORK, US, Bd. 79, Nr. 6, 1. Juni 1991 (1991-06-01), Seiten 827-838, XP000262356 ISSN: 0018-9219, beschreibt das 3-Frequenz-Radarsystem SIR-C/X-SAR, das im September 1993 von der US-amerikanischen Space Shuttle geflogen wurde. LOMBARDO P: "A multichannel spaceborne radar for the COSMO-skymed satellite constellation" AEROSPACE CONFERENCE, 2004. PROCEEDINGS. 2004 IEEE BIG SKY, MT, USA 6-13 MARCH 2004, PISCATAWAY, NJ, USA,IEEE, US, 6. März 2004 (2004-03-06), Seiten 111-119, XP010747971 ISBN: 0-7803-8155-6, analysiert insbesondere verschiedene Konfigurationen einer SAR-Antennenfläche, indem diese horizontal (Azimut) und vertikal (Elevation) in Sende- (TX) und Empfangs (RX)-Subarrays aufgeteilt wird,

Aufgabe der vorliegenden Erfindung ist es daher, eine hochauflösende Synthetik-Apertur-Radarvorrichtung und eine Antenne für eine hochauflösende Synthetik-Apertur-Radarvorrichtung vorzuschlagen, welche die Abtastung möglichst breiter Streifen mit hoher Azimutauflösung mit einer wesentlich kleineren Antennenfläche als bei einem HRWS-SAR erlauben.

Diese Aufgabe wird durch eine hochauflösende Synthetik-Apertur-Radarvorrichtung mit den Merkmalen nach Anspruch 1 und eine Antenne für eine hochauflösende Synthetik-Apertur-Radarvorrichtung mit den Merkmalen nach Anspruch 11 gelöst, Bevorzugte Ausgestaltungen der Erfindung ergeben sich aus den abhängigen Ansprüchen.

Ein Gedanke der Erfindung besteht darin, eine hohe Pulswiederholungsrate bzw. PRF wie beim herkömmlichen SAR beizubehalten, aber ein Objekt parallel mit mehreren nacheinander ausgesandten Radarpulsen abzutasten. Um die benötigte Antennenfläche in Unterschied zum HRWS-SAR zu verkleinern, sind weniger als drei Azimutaperturen vorgesehen,

beispielsweise zwei oder vorzugsweise nur eine Azimutapertur. Da Impulssignale über die Radarstrahlen regelmäßig ausgesandt werden, müssen die Abtastvorgänge empfangener Radarstrahlen unterbrochen werden, wodurch es zu Datenlücken bei der Abtastung eines Objekts kommt, die zu schwarzen Streifen im späteren SAR-Bild führen. Um derartige Datenlücken zu vermeiden, werden gemäß der Erfindung die Impulssignale der Radarstrahlen in ungleichmäßigen Zeitabständen ausgesandt, wodurch Datenlücken beim Abtasten nicht stets an denselben Stellen auftreten, was zu einem kompletten Verlust von Azimutsignalen führen würde, sondern sich von Echo zu Echo verteilen und nur zu lokalen Fehlstellen in den Abtastungen führen. Derartige lokale Fehlstellen können dann nachträglich mittels eines Resampling-Verfahrens durch Rekonstruktion der fehlenden Abtastwerte rekonstruiert werden.

Die Erfindung hat den Vorteil, dass breite Streifen bei einer hohen Azimutauflösung mit einer gegenüber dem HRWS-SAR kleineren Antennenfläche abgebildet werden können. Dadurch kann eine hochauflösende Synthetik-Apertur-Radarvorrichtung gemäß der Erfindung insgesamt kleiner und leichter als ein HRWS-SAR gebaut werden, wodurch sich die Kosten einer SAR-Vorrichtung gemäß der Erfindung, insbesondere die Transportkosten beispielsweise in den Weltraum verringern.

Die Erfindung betrifft nun gemäß einer Ausführungsform eine hochauflösende Synthetik-Apertur-Radarvorrichtung umfassend mindestens eine Sendeantenne zum Erzeugen von Radarstrahlen zum Abtasten eines Objekts, eine Empfangsantenne zum Empfangen von an dem Objekt reflektierten Radarstrahlen, wobei die Empfangsantenne mehrere entlang einer Elevation angeordnete Subaperturen aufweist, und wobei die hochauflösende Synthetik-Apertur-Radarvorrichtung derart ausgebildet ist, dass Impulssignale in ungleichmäßigen Zeitabständen ausgesendet werden.

Unter einer SAR-Vorrichtung wird hier eine beliebige SAR-Platform verstanden, insbesondere eine SAR-Satellit.

Die hochauflösende Synthetik-Apertur-Radarvorrichtung kann ferner so ausgebildet werden, dass die Subaperturen weniger Azimutaperturen bilden, als im Falle eines HRWS-SAR.

Um Datenlücken bei der Abtastung eines Objektes zu füllen, kann die hochauflösende Synthetik-Apertur-Radarvorrichtung ferner derart ausgebildet sein, dass für eine Verarbeitung von empfangenen Radarechos im Azimut ein Resampling-Verfahren eingesetzt wird. Durch das Resampling-Verfahren können nachträglich die bereits erwähnten lokalen Fehlstellen in den Abtastungen der empfangenen Radarstrahlen und darin enthaltenen Echoimpulssignale rekonstruiert werden.

Die hochauflösenden Synthetik-Apertur-Radarvorrichtung kann weiterhin so ausgebildet werden, dass eine Sendeantenne im Frequenzmultiplex betrieben wird.

Um einen hohen Signal-Rauschabstand zu erzielen, sollte mit möglichst hoher Leistung gesendet werden. Um die für eine hohe PRF erforderlichen Spitzenleistungswerte zu reduzieren, kann die hochauflösende Synthetik-Apertur-Radarvorrichtung ferner derart ausgebildet sein, dass mindestens zwei Sendeantennen gleichzeitig im Frequenzmultiplex betrieben werden. Dadurch kann innerhalb einer vorgegebenen Impulssignaldauer bzw. Pulsdauer die mehrfache Sendeenergie verwendet werden als beim Senden ohne Frequenzmultiplex.

Da mehrere Radarpulse in kurzen Zeitabständen über die Sendeantennen ausgesendet werden, werden auch mehrere reflektierte Radarechos zeitgleich von der Empfangsantenne empfangen. Um Überlagerungen der empfangenen Radarechos von unterschiedlichen Sendepulsen und damit Fehler (sog. Range Ambiguities) im späteren SAR-Bild zu vermeiden, kann die hochauflösende Synthetik-Apertur-Radarvorrichtung ferner ausgebildet werden, um mittels Digital Beam Forming je einen Empfangskanal für jedes der Radarechos bereitzustellen.

Insbesondere kann sie ausgebildet sein, um ein empfangenes Radarecho von benachbarten empfangenen Radarechos streng zu trennen, indem die Signale der Subaperturen in der digitalen Domäne mit zeitabhängigen komplexen Gewichtsfaktoren versehen werden. Insbesondere bei einer hohen PRF und einem damit kleinen Pulswiederholungsintervall sowie am abgetasteten Objekt nahe beieinander liegenden Echozentren erweist sich eine derartige Gewichtung der einzelnen Signale der Subaperturen der Empfangsantenne als eine effiziente Methode zum Trennen von benachbarten Radarechos.

Insbesondere kann sie so ausgebildet sein, dass die zeitabhängigen komplexen Gewichtsfaktoren so ausgebildet sind, dass ein Antennendiagramm in die Richtungen von eine Null erhält.

In einer Weiterbildung kann die hochauflösende Synthetik-Apertur-Radarvorrichtung ferner derart ausgebildet sein, um ein Space-Time Adaptive Processing der Signale der Subaperturen durchzuführen. Hierbei erfolgt eine Gewichtung im Raum-Zeitbereich der Signale der Subaperturen, wodurch eine noch genauere Trennung benachbarter Radarechos erreicht werden kann.

Um den Datenverkehr zu einem zentralen SAR-Prozessor möglichst zu verringern, kann die hochauflösende Synthetik-Apertur-Radarvorrichtung ferner ausgebildet sein, um die aus den empfangenen Radarechos gewonnenen Daten vor Übertragung an eine Bodenstation zu komprimieren. Die Komprimierung kann beispielsweise durch Entfernen von überflüssigen, da redundanten Daten einer Abtastung der empfangenen reflektierten Radarstrahlen erfolgen.

In einer bevorzugten Ausführungsform weist die hochauflösende Synthetik-Apertur-Radarvorrichtung für jede Sendeantenne jeweils ein Sendemodul und Front-End zum Erzeugen eines Radarpules auf. Dadurch können unabhängig voneinander Radarpulse ausgesendet werden, wodurch sich eine hohe Flexibilität beim Einsatz der Vorrichtung erreichen lässt.

Insbesondere können die Sendemodule und Front-Ends ausgebildet sein, um köherent und gleichzeitig Sendechirps auszusenden, wobei jedes Sendemodul und Front-End ausgebildet ist, um jeweils in einem anderen Frequenzbereich auszusenden. Dadurch kann eine hohe Sendeenergie bei einer hohen PRF erzielt werden, was für einen hohen Signal-Rauschabstand erforderlich ist.

Um die in unterschiedlichen Frequenzbereichen ausgesendeten Radarpulse wieder separieren zu können, kann die hochauflösende Synthetik-Apertur-Radarvorrichtung digitale Frequenzfilter aufweisen, die vorgesehen sind, um die die aus empfangenen Radarstrahlen erzeugten Datenströme frequenzmäßig zu trennen.

Eine weitere Ausführungsform der Erfindung betrifft eine hochauflösende Synthetik-Apertur-Radarvorrichtung umfassend mindestens zwei Sendeantennen zum Erzeugen von Radarstrahlen zum Abtasten eines Objekts, wobei die mindestens zwei Sendeantennen gleichzeitig im Frequenzmultiplex betrieben werden.

Eine weitere Ausführungsform der Erfindung betrifft eine Antenne für eine hochauflösende Synthetik-Apertur-Radarvorrichtung insbesondere nach einem der vorhergehenden Ansprüche, umfassend zwei oder mehr Sendeantennen, die in Elevation nebeneinander angeordnet sind und zum Aussenden jeweils eines Radarstrahls im Mikrowellenbereich ausgebildet sind, eine zum Empfangen von reflektierten Radarstrahlen im Mikrowellenbereich ausgebildete Empfangsantenne, die in Elevation neben den Sendeantennen angeordnet ist und in Elevation mehrere Subaperturen aufweist, die weniger als drei Azimutaperturen bilden.

Die Antenne kann ferner so ausgebildet werden, dass die zwei oder mehr Sendeantennen in Elevation nebeneinander angeordnet sind.

Die Antenne kann weiterhin so ausgebildet werden, dass die Empfangsantenne in Elevation neben die zwei oder mehr Sendeantennen angeordnet ist.

In einer bevorzugten Ausführungsform der Antenne bilden die Subaperturen genau eine Azimutapertur. Dadurch wird eine sehr kompakte Antenne geschaffen, die trotzdem eine hohe Auflösung in Azimut ermöglicht.

Um den von den Sendeantennen ausgeleuchteten Bereich abzudecken und Quantization Lobes bei allen erforderlichen Abtast- bzw. Scanwinkeln hinreichend zu unterdrücken, ist gemäß einer bevorzugten Ausführungsform der Antenne die Höhe jeder Subapertur in Elevation geringer ist als die Höhe jeder Sendeantenne in Elevation.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1    drei verschiedene Ausführungsbeispiele von Antennen von SAR-Vorrichtungen, wobei eine Antenne zu einem herkömmlichen monostatischen SAR, eine Antenne zu einem bistatischen HRWS-SAR und eine Antenne zu einer SAR-Vorrichtung gemäß der Erfindung gehört;

Fig. 2    die Abtastung eines breiten Streifens der Erdoberfläche mit einem SAR, wobei Echos von mehreren Radarpulsen gleichzeitig vom SAR empfangen werden;

Fig. 3    die Abtastung eines breiten Streifens der Erdoberfläche mit einem SAR, wobei drei Radarechos mittels dreier Antennenkeulen gleichzeitig vom SAR empfangen werden;

Fig. 4    gespeicherte Range Lines der drei empfangenen und abgetasteten Radarechos der in Fig. 3 gezeigten Konstellation;

Fig. 5    ein Ausführungsbeispiel einer SAR-Vorrichtung gemäß der Erfindung mit variabler PRI (pulse repetition interval) und insgesamt fünf Antennenkeulen; und

Fig. 6    gespeicherte Range Lines der fünf über separate Antennenkeulen empfangenen und abgetasteten Radarechos der in Fig. 5 gezeigten Konstellation.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

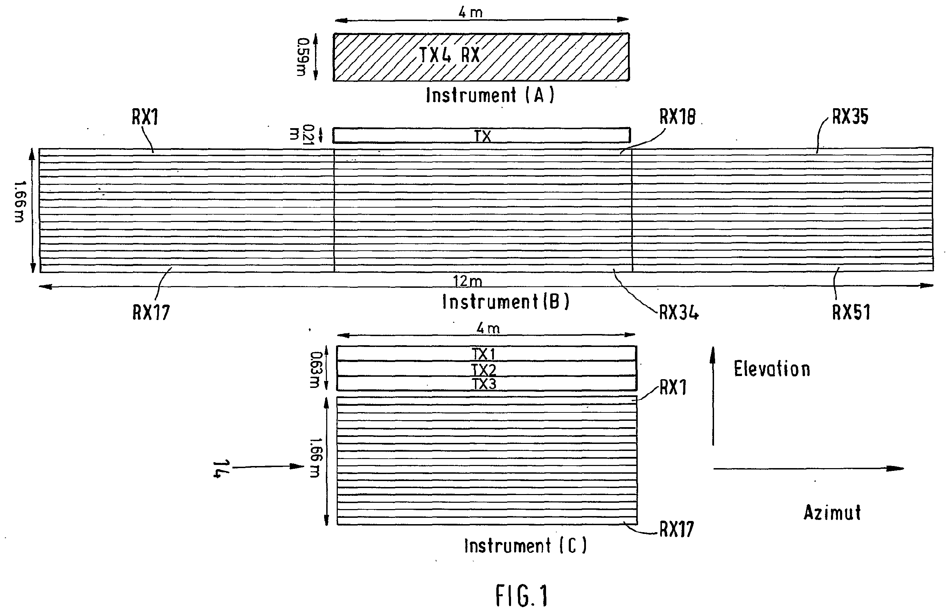

Eine beispielhafte Antenne eines herkömmlichen monostatischen SAR-Instruments ist in Fig. 1 als Instrument (A) bezeichnet dargestellt. Unter dem Begriff "Instrument" wird hier insbesondere eine SAR-Vorrichtung wie beispielsweise auf einem SAR-Satellit implementiert verstanden. Das Instrument (A) von Fig. 1 wird typischerweise im X-Band mit einer Bandbreite der ausgesendeten Impulssignale von etwa 150-200 MHz und einer mittleren Sendeleistung von 750 W betrieben. Die gemeinsame Sende (TX)- und Empfangs (RX)-Antenne besitzt Abmessungen von etwa 4 m in Azimutrichtung (Azimut) und eine Höhe (Elevation) von etwa 0,59 m. Der Satellit mit dem Instrument (A) befindet sich in einer Orbithöhe von etwa 500 km. Die PRF beträgt etwa 4200 bis 5300 Hz, was einer geometrischen Auflösung von etwa 2 m entspricht. Der Duty cycle (Arbeitszyklus) der ausgesandten Impulsfolge beträgt etwa 20 bis 30 %.

Grundsätzlich gilt für SAR-Systeme, dass die Größe der Sendeantenne den mit einem Radarpuls ausgeleuchteten Bereich bestimmt. Die Abmessung in Elevation (Aperturhöhe) der Sendeantenne ist hierbei umgekehrt proportional zur endgültigen Bildstreifenbreite. Daher muss zum Erzeugen einer größeren Bildstreifenbreite die Aperturhöhe der Sendeantenne verringert werden. Dies ist bei der im Folgenden erläuterten Antenne eines HRWS-SARs der Fall.

Eine beispielhafte Antenne eines HRWS-SAR ist in Fig. 1 als Instrument (B) bezeichnet dargestellt. Die Antenne basiert auf der Performance des Instruments (A) von Fig. 1 und weist im Gegensatz zum Instrument (A) eine TX-Antenne und eine gesonderte RX-Antenne auf, die insgesamt von einer Vielzahl, hier genau 51 "kleinen" RX-Antennen, bezeichnet mit RX1 bis RX51, gebildet wird. Um die nominelle PRF des Instruments (A) um einen Faktor von 3 zu reduzieren, besitzt das Instrument (B) drei Azimutaperturen entsprechend drei Azimutpanels, wovon jede(s) durch 17 Subaperturen entsprechend 17 "kleinen" RX-Antennen gebildet wird.

Die TX-Antenne besitzt eine Aperturhöhe von nur 0,21 m, um eine Streifenbreite von größer als 80 km bei allen Einfallswinkeln zu erzielen. Die Gesamtaperturhöhe der RX-Antenne beträgt 1,66 m, um in Anbetracht der geringen Aperturhöhe der TX-Antenne einen ausreichenden RX-Antennengewinn zu erzielen. Jede der "kleinen" RX-Antennen RX1 bis RX51 besitzt jeweils eine Höhe von 0,098 m (Subaperturhöhe), die kleiner als die Aperturhöhe der TX-Antenne ist, um den von der TX-Antenne ausgeleuchteten Bereich abzudecken und die Quantization Lobes bei allen erforderlichen Abtast- bzw. Scanwinkeln hinreichend zu unterdrücken (< -13 dB). Auch Instrument (B) wird mit einer mittleren Sendeleistung von etwa 750 W betrieben. Der Duty cycle der ausgesandten Impulsfolge beträgt etwa geschätzte 30 %. Die Antennengesamtlänge beträgt 12 m, die jedes Azimutpanel 4 m, wodurch eine Azimutauflösung von 2 m erzielt werden kann.

Das von jeder einzelnen RX-Antenne RX1 bis RX51 empfangene Signal wird einem eigenen Kanal zugeführt. Jeder Kanal besitzt einen eigenen gesonderten Eingang einer nachfolgenden (nicht dargestellten) digitalen Signalverarbeitung.

Schließlich ist in Fig. 1 noch eine als Instrument (C) bezeichnete Antenne gemäß der Erfindung dargestellt, wie sie bei einer SAR-Vorrichtung gemäß der Erfindung eingesetzt werden kann, das Impulse in ungleichmäßigen Zeitabständen aussendet. Im Unterschied zu den Instrumenten (A) und (B) besitzt diese Antenne drei gesonderte TX-Antennen, bezeichnet mit TX1 bis TX3, welche jeweils die gleichen Abmessungen wie die TX-Antenne von Instrument (B) besitzen und nebeneinander in Querrichtung zur Azimutrichtung angeordnet sind. Die drei TX-Antennen TX1 bis TX3 erzeugen jeweils Radarpulse zum Abtasten in Elevation. Als Empfangsantenne ist im Gegensatz zum Instrument (B) nur ein Azimutpanel mit 17 "kleinen" RX-Antennen vorgesehen, die jeweils die gleichen Abmessungen wie die kleinen RX-Antennen des Instruments (B) besitzen. Die geometrische Auflösung des Instruments (C) entspricht derjenigen der Instrumente (A) und (B).

Die Verwendung von mehr als einer Azimutapertur wie beim Instrument (B) von Fig. 1 dient der Absenkung der nominell erforderlichen PRF. Die verringerte PRF kann zum Senden längerer Impulse genutzt, wodurch sich die maximale Sendeleistung (Peak Power des Sendeverstärkers) verringern und/oder die SNR gegenüber einem Instrument (A) verbessern lässt. Bei der vorliegenden Erfindung ist dagegen die vorrangige Zielsetzung eine Vergrößerung der Streifenbreite bei unveränderter SNR-Performance des Instruments im Vergleich zu (A) bei Verwendung nur einer Azimutapertur.

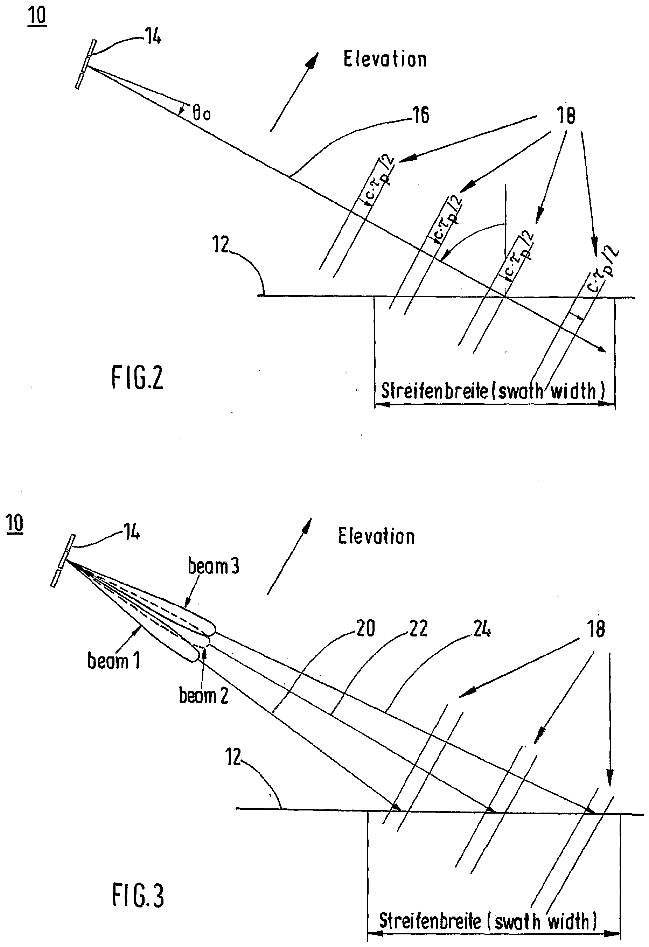

Fig. 2 zeigt zunächst prinzipiell, wie mit einer SAR-Vorrichtung 10 die Erdoberfläche 12 abgetastet wird. Die SAR-Vorrichtung 10 sendet über eine Antenne 14 Impulssignale bzw. Impulse in Form eines Radarstrahls 16, genauer gesagt in Form einer Antennen-Strahlungskeule (Antennenkeule) in Richtung zur Erdoberfläche 12 aus. Die Strahlungskeule besitzt einen Öffnungswinkel $\hbar_0$, der zusammen mit dem Einfallswinkel $\eta$ der Radarstrahls 16 auf der Erdoberfläche 12 die Streifenbreite (swath width) bestimmt. Jedes ausgesendete Impulssignal 18 besitzt eine Pulsdauer $\tau_p$, welche die Entfernungsauflösung $\Delta r$ des SARs und die Teilstreifenbreite im Schräg- bzw. Neigungsbereich (slant range) wie folgt bestimmt:

$$\Delta r = \frac{1}{2} \cdot \tau_p \cdot c$$

(c ist die Lichtgeschwindigkeit). Mit dem Einfallswinkel $\eta$ kann dies zu einer Teilstreifenbreite auf der Erdoberfläche 12 wie folgt umgerechnet werden:

$$\frac{\tau_p \cdot c}{2 \cdot \sin(\eta)}$$

Die bei einer SAR-Vorrichtung gemäß der Erfindung gegebene Verfügbarkeit mehrerer Aperturen in Elevation und ein Digital Beam Forming beim Empfang erlauben die Ausprägung mehrerer Antennenkeulen, von denen jede auf einen der Teilstreifen gerichtet ist. Wenn die jeweiligen Hauptkeulen hinreichend gut lokalisiert sind und Nebenkeulen bzw. Quantization Lobes hinreichend gut unterdrückt wurden, "sieht" jede Antennenkeule nur "ihr" Echosignal, wie in Fig. 3 anhand von drei, auf verschiedene Teilstreifen gerichtete Antennenkeulen 20, 22 und 24 gezeigt ist. Das Echosignal jeder Antennenkeule wird als eigene so genannte Range Line abgespeichert.

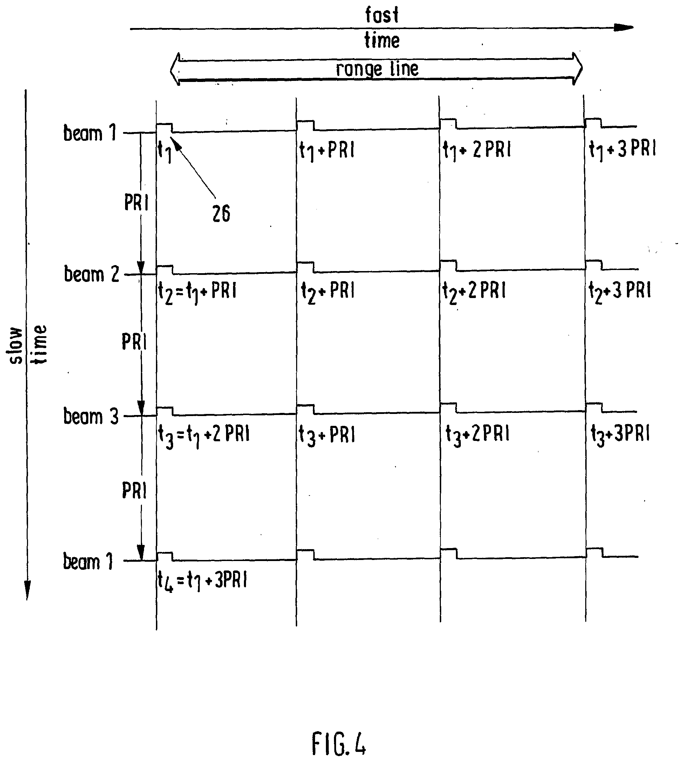

Fig. 4 zeigt den Range Line Puffer des Instruments bzw. der SAR-Vorrichtung gemäß der Erfindung. Die von jeder der drei Antennenkeulen als Echosignale empfangenen Range Lines sind in Fig. 4 als Zeilen dargestellt. Sie werden der Reihe nach, so wie sie chronologisch anfallen, untereinander eingetragen. In Fig. 4 verläuft daher eine "fast time" von links nach rechts und eine "slow time" von oben nach unten. In Fig. 4 sind die Range Lines von drei Antennenkeulen "beam 1", "beam 2" und "beam 3" wie in Fig. 3 gezeigt dargestellt. Die drei Antennenkeulen setzen sich im zeitlichen Abstand einer Pulsperiode (PRI: Pulse Repetition Intervall) auf den jeweils nächsten Impuls, der in den abzutastenden Streifen eintritt, auf und generieren für diesen eine Range Line. Im dargestellten Beispiel ist die abgetastete Streifenbreite im Schrägbereich

$$R_2 - R_1 = (3 \cdot PRI - \tau_p) \cdot \frac{c}{2},$$

wobei $R_1$ bzw. $R_2$ die kleinste bzw. größte Schrägbereichsentfernung der Streifengrenzen bezeichnen. Die Entfernung $R_1$ ist hierbei so gewählt, dass beim Eintritt eines Impulses in den Streifen im Instrument gerade auf Empfang umgeschaltet werden kann:

$$R_1 = (n \cdot PRI + \tau_p) \cdot \frac{c}{2}.$$

Die Aufzeichnung einer Range Line muss für eine Zeitdauer

$$\Delta T = PRI - \tau_p$$

nach Beginn unterbrochen werden, da dann mit dem Senden eines neuen Impulses begonnen wird. Dies ist in Fig. 4 durch Tore (siehe Bezugszeichen 26) dargestellt. Ehe die Range Line fertig gestellt werden kann, tritt noch ein zweites Tor auf.

Für die in Richtung der "slow time" verlaufende Azimutverarbeitung sind die Tore verlorene Abtaststellen. Die Tore verbreitern sich noch um eine halbe Impulslänge auf beiden Seiten, da jede Range Line vor der Azimutverarbeitung noch komprimiert werden muss, und führen zu unerwünschten Streifen im späteren SAR-Bild. Für eine Impulslänge von beispielsweise 50 μs betragen sie immerhin etwa 15 km im Schrägbereich.

Gemäß der Erfindung wird nun zur Vermeidung der unerwünschten "schwarzen" Streifen im späteren SAR-Bild die Pulsperiode PRI variiert, so dass die Impulssignale 18 der Radarstrahlen 16 in ungleichmäßigen Zeitabständen ausgesendet werden. Auf diese Weise liegen die Range Line Tore 26 nicht alle untereinander und es existieren keine Azimutspalten ganz ohne Abtastwerte. Die Azimutspalten repräsentieren dann zwar eine ungleichförmige Abtastung des Azimutsignals, aus der sich jedoch nach dem verallgemeinerten Abtasttheorem ein gleichförmig abgetastetes Azimutsignal rekonstruieren lässt.

Anhand eines Beispiels soll dies nun erläutert werden. Es wird eine Folge von Pulsabständen in einem so genannten Modus Nr. 6

$$PRI = 10\tau, 9\tau, 8\tau, 7\tau, 6\tau, 10\tau, 9\tau, \ldots$$

verwendet, wobei gilt

$$\tau = 2\tau_p \, ,$$

d.h. $\tau$ entspricht der doppelten Pulslänge $2\tau_p$. Der obige Modus Nr. 6 ist nicht die einzige oder beste Möglichkeit des Aussendens von Impulsen. Es existiert eine Vielzahl anderer Modi bzw. Möglichkeiten, die alle ihre spezifischen Vorteile besitzen.

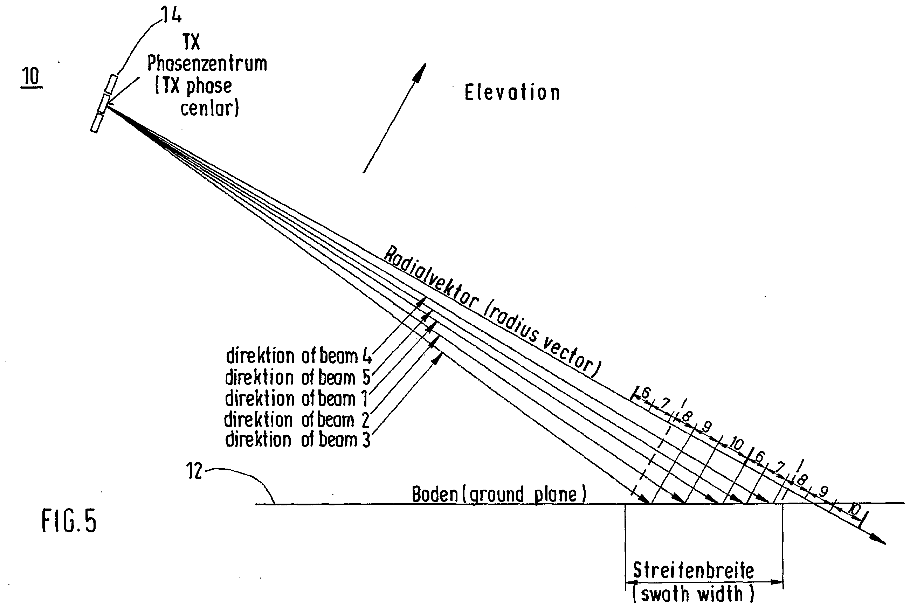

In Fig. 5 empfängt nun eine SAR-Vorrichtung 10 wie beispielsweise ein SAR-Satellit über eine entsprechende Empfangsantenne mit fünf Antennenkeulen "beam 1" bis "beam 5" gleichzeitig und kohärent Radarechos. In Fig. 5 ist die Schrägbereichsachse entsprechend dem Modus Nr. 6 unterteilt, d.h. 6 steht dort für eine Radialdistanz von

$$6 \rightarrow 6\tau \cdot \frac{c}{2} \, .$$

Am Anfang eines PRI steht immer das Senden eines Pulses. Sobald der Puls in den abzubildenden bzw. abzutastenden Streifen eingelaufen ist, genauer gesagt sobald die zum Puls gehörigen Echos der vordersten Streuzentren des Streifens empfangen werden, setzt sich ein SCORE (Scan On REceive)-Beam auf den Puls und zeichnet eine Range Line auf. Die Aufzeichnung wird dann unterbrochen, wenn ein neuer Puls ausgesendet wird. In dem in Fig. 5 dargestellten Beispiel gibt es - wie bereits gesagt - fünf Empfangsantennenkeulen und vier Unterbrechungen der Aufzeichnung pro Range Line. Wenn eine Keule frei wird, wird sie auf den nächsten in den Streifen einlaufenden Puls gesetzt.

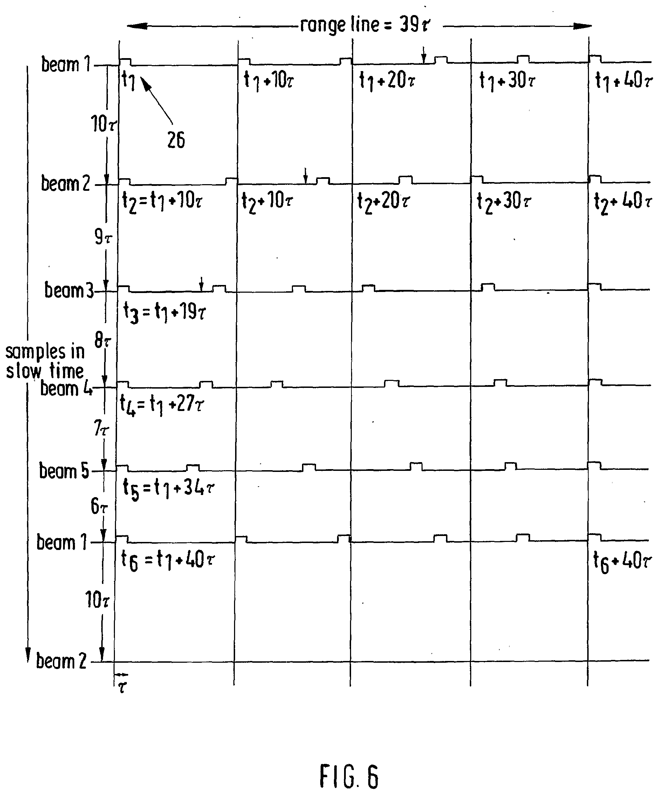

Die zugehörigen Daten, die gespeichert werden, sind in Fig. 6 als Range Lines gezeigt. Am Anfang und Ende jeder Range Line gibt es wieder Intervalle, die keine Daten aufweisen, da die Tore 26 in den Spalten genau untereinander liegen. Zwischen den "Daten-losen" Intervallen erstreckt sich in jeder Range Line ein Zeitintervall, das eine "fast time" von $39\tau$ überdeckt und das vier Tore ohne Daten enthält. Jedes dieser Intervalle entspricht einer aufgezeichneten Range Line bzw. einer erfassten Streifenbreite. Bei der Azimutprozessierung fehlt pro Azimutspalte von fünf potentiellen Samples höchstens eines. D.h. pro $40\tau$ Signaldauer in Azimut sind immer mindestens vier Samples zu dessen Rekonstruktion verfügbar.

Im Folgenden wird nun die Azimutprozessierung im Detail erläutert. Ein bandbreitenbegrenztes Signal kann auch bei unregelmäßiger Abtastung rekonstruiert werden, wie in dem Aufsatz "Unambiguous SAR Signal Reconstruction from Nonuniform Displaced Phase Center Sampling", G. Krieger, N. Gebert, A. Moreira, IEEE Geoscience and Remote Sensing Letters, Vol. 1, No. 4, Oct. 2004, beschrieben ist. In diesem Aufsatz wird eine Untersuchung einer Abtastung beschrieben, bei der M separate, in Azimut gleichförmig bewegte und gegeneinander verschobene Aperturen ein Signal der Bandbreite B mit gleichmäßiger, aber um den Faktor M verringerter Abtastrate

$$f_s = \frac{B}{M}$$

aufzeichneten. Dabei unterliegen die Abstände der Aperturen theoretisch fast keinen Einschränkungen; vor allem dürfen sich unterschiedliche Aperturen nicht zu unterschiedlichen Abtastzeitpunkten an exakt derselben Azimutposition befinden. Im Falle verrauschter Signale fällt das SNR des rekonstruierten Signals schon in dem Maße, wie sich eine solche "verbotene" Situation der Mehrfachabtastung am gleichen Ort anbahnt.

Bezogen auf das obige Beispiel liefern bei der Rekonstruktion jedes einzelnen Azimutsignals (jeder einzelnen Spalte des Diagramms von Fig. 6) jeweils mindestens vier Antennenkeulen ein Sample. Die vier Keulen als Samplelieferanten können mit den einzelnen Aperturen aus dem obigen Aufsatz verglichen werden; sie liefern jeweils ein Sample mit gleichförmiger Periode von $40\tau$, und liegen dabei zwischen $6\tau$ und $10\tau$ auseinander. Solange sie einen von 0 verschiedenen Abstand haben, ließe sich ein rauschfreies Azimutsignal perfekt rekonstruieren. In der Realität sollte aber zur Vermeidung eines steigenden Rauschpegels beim rekonstruierten Signal darauf geachtet werden, dass diese Abstände nicht zu klein werden. Als Maßzahl für die Ungleichförmigkeit kann hier die größte beim zusammengelegten Sampling entstehende Zeitlücke (im in Fig. 6 dargestellten Beispiel $19\tau$) relativ zum aus der Azimutbandbreite B abgeleiteten nominell (bei gleichmäßiger Abtastung) erforderlichen $PRI_0$

$$u = \frac{19\tau}{PRI_0} = 19\tau \cdot B$$

verwendet werden. Das nach Resampling erzielte PRI der äquivalenten gleichförmigen Abtastung ist im vorliegenden Beispiel wegen M=4 gegeben zu

$$PRI = \frac{40\tau}{M} = 10\tau.$$

Das PRI nach Resampling darf das geforderte nominelle $PRI_0$ nicht überschreiten, d.h.

$$20\tau_p = 10\tau = PRI \leq PRI_0.$$

Dies ist eine Bedingung für die maximal zulässige Pulsdauer $\tau_p$ im vorliegenden Modus Nr. 6 einer ungleichförmigen Abtastung. Unter Verwendung der größtmöglichen Pulsdauer ergibt sich wegen $PRI=PRI_0$ und $\tau=PRI_0/10$ für die Ungleichförmigkeit u der Wert 1,9. Für kürzere Pulsdauern ist der Wert u wegen $\tau=PRI_0/10 < PRI/10$ entsprechend kleiner und entspricht bereits einer Überabtastung.

Aufgrund der in dem oben erwähnte Aufsatz veröffentlichten Simulationsergebnisse wird vorliegend davon ausgegangen, dass für u<2 ein zufrieden stellendes SNR beim rekonstruierten Azimutsignal erzielt werden kann. Für u=1 hätte man ungleichförmige Abtastung mit einer maximalen Abtastperiode, die dem größtmöglichen PRI bei gleichförmiger Abtastung gleichkäme.

Der Modus Nr. 6 lässt sich natürlich variieren. Im Folgenden werden nun verschiedene Beispiele für ungleichförmige Abtastung vergleichend bewertet. Für diese Bewertung werden die für die Beispiele jeweils erzielbaren Streifenbreiten und die dabei jeweils erforderlichen Spitzenleistungswerte beim Senden abgeschätzt.

Ein Modus einer ungleichförmigen Abtastung ist durch den K-dimensionalen Integervektor v

$$v = \begin{bmatrix} v_1 v_2 \dots v_k \end{bmatrix}$$

charakterisiert. Dem Modus Nr. 6 entspricht beispielsweise der 5-dimensionale Vektor

$$v = \begin{bmatrix} 10 & 9 & 8 & 7 & 6 \end{bmatrix}.$$

M<K bezeichnet die Mindestanzahl von Azimutsamples, die beim Azimutprozessieren verfügbar sind (im Beispiel des Modus Nr. 6 ist M=4). Mit

$$S = \sum_{k=1}^{K} v_k$$

(beim Modus Nr. 6 ist S=40) ergibt sich die maximal mögliche Pulsdauer aus der Bedingung

$$S \cdot \tau = M \cdot PRI,$$

da $S\tau$ die Abtastperiode jedes der M separat abtastenden Strahlen darstellt und jeder dieser Strahlen M-mal langsamer abtasten darf als ein einziger gleichförmig abtastender Kanal. Aus der letzten Gleichung lässt sich ableiten:

$$\tau_p = \frac{\tau}{2} = \frac{M \cdot PRI}{S \cdot 2}.$$

Falls für die Ungleichförmigkeit des betreffendes Modus nicht die Bedingung

$$u \leq 1.9$$

erfüllt ist, werden $\tau$ und damit $\tau_p$ proportional verkleinert bis $u$ = 1.9 gilt.

Die mit einem Modus erzielbare Streifenbreite W ist

$$W = (S-1) \cdot \tau \cdot \frac{c}{2}.$$

Für die Ermittlung der erforderlichen Spitzen- bzw. Durchschnittsleistung beim Senden wird das konventionelle Instrument (A) (siehe Fig. 1) als Referenz verwendet.

Als typische Betriebsparameter des Referenzinstruments (A) werden eine Durchschnittsleistung von 750 W, eine PRF von 5280 Hz und ein Duty cycle von 25 % verwendet. Dies führt zu Pulsdauern von ca. 47 $\mu$s und einer Spitzenleistung von 3 KW.

Damit das SAR-Instrument (C) (siehe Fig. 1) gemäß der Erfindung etwa das gleiche SNR wie das Referenzinstrument (A) aufweist (das SNR des Instrument (B) von Fig. 1 ist bei gleichem Duty cycle um einen Faktor 3 höher), sollte die Energie, die von Instrument (C) pro Puls ausgesendet wird, gleich der Einzelimpulsenergie von Instrument (A) sein. Für die Performanceanalyse sind folgende mittlere Größen von Instrument (C) erforderlich:

$$\text{mittlere Abtastperiode} \quad \overline{PRI} = \frac{S \cdot \tau}{K}$$

$$\text{mittlere Pulsrate} \quad \overline{PRF} = \frac{1}{\overline{PRI}}$$

$$\text{mittlerer Duty cycle} \quad \overline{\delta} = \tau_p \cdot \overline{PRF}.$$

Für gleiches SNR von Instrument (C) und (A) sollte die Spitzenleistung $P_0$ bei Instrument (C) dem Pulsdauerverhältnis zwischen dem Instrument (A) und (C) angepasst werden:

$$P_0 = 3KW \cdot \frac{47 \mu s}{\tau_p}.$$

Die mittlere Sendeleistung von Instrument (C) ergibt sich zu

$$\overline{P} = P_0 \times \overline{\delta}.$$

Die folgende Tabelle erlaubt den Vergleich einiger Modi von ungleichförmiger Abtastung im Vergleich zum konventionellen Referenzsystem (A). Folgende Feststellungen können getroffen werden:

1. Große Komponenten des Modusvektors führen zu kurzen Pulsen.
2. Kurze Pulse führen zu großen Streifenbreiten und hohen Spitzenleistungswerten.
3. Die mittlere Sendeleistung ist bei der ungleichförmigen Abtastung höher als beim konventionellen Instrument (A), weil ein Teil der Pulse für die Azimutprozessierung verloren geht.
4. Das Beispiel 3 wird als guter Kompromiss zwischen Streifenbreite und Spitzenleistung angesehen.

Die durchweg hohen Spitzenleistungswerte lassen sich durch das unten beschriebene Frequenzmultiplexverfahren gemäß der Erfindung beim Senden auf akzeptable Werte reduzieren.

| | Ref.instr. (A) | Beispiel 1 | Beispiel 2 | Beispiel 3 | Beispiel 4 | Beispiel 5 |
|---|---|---|---|---|---|---|
| PRI Modus | gleichförmig | τ [10, 9, 8, 7, 6] | τ [19, 7, 6, 5, 3] | τ [3, 3, 3, 2, 2, 2] | τ [3, 3, 2, 2, 1, 1] | τ [3, 3, 2, 2] |
| Sequenzlänge K = Zahl der erfoderliche SCORE-Strahlen | - | 5 | 5 | 6 | 6 | 4 |
| M | - | 4 | 4 | 3 | 3 | 2 |
| Pulsdauer bei $PRI_0$=5280 Hz und u=1.9 | 47µs | 9.5µs | 11.2µs | 16.4µs | 18µs | 18.9µs (bei u=1.6) |
| Streifenbreite (Schrägbereich) | 28.4 km | 110.8 km | 97.8 km | 68.7 km | 59.4 km | 51.1 km |
| mittlere Pulsrate | 5.3 kHz | 6.6 kHz | 7.4 kHz | 12.2 kHz | 13.9 kHz | 10.6 kHz |
| mittlerer Duty cycle | 25% | 6.3% | 8.3% | 20% | 25% | 20% |
| mittlere Sendeleistung | 750W | 938W | 1.05kW | 1.74K W | 1.97K W | 1.5KW |
| Spitzenleistung | 3KW | 15.0K W | 12.6K W | 8.7KW | 7.9KW | 7.5KW |
| Spitzenleistung bei drei TX-Antennen bzw. - Aperturen | - | 5.0KW | 4.2KW | 2.9K | 2.6KW | 2.5KW |

Da im Gegensatz zum Instrument (B) mit einer hohen mittleren PRF gearbeitet wird, ergeben sich bei der SAR-Vorrichtung gemäß der Erfindung relativ kurze Pulsdauern $τ_p$. Um zum gleichen SNR wie beim Referenzinstrument (A) zu gelangen, sollte aber beim Instrument (C) jeder Puls etwa die gleiche Energie tragen wie beim Instrument (A). Dies führt zu den relativ hohen Spitzenleistungswerten der obigen Tabelle.

Prinzipiell können diese hohen Leistungen durch Parallelisierung von Leistungsverstärkern realisiert werden, was aber insbesondere bei Weltraumanwendungen große Risiken birgt: Bei Röhren-Verstärkern mit mehren kW Pulsleistung besteht z.B. die Gefahr von Hoch-Energie-Effekten wie Multipaction, bei Halbleiterverstärkern gibt es zum einen technologische Beschränkungen zum anderen kann die Erhöhung der Verstärkerdichte, d.h. der Anzahl von Verstärkern pro Fläche, zu ernsten thermischen Problemen führen.

Abhilfe kann hier die Verwendung mehrerer (hier: drei) Sendemodule und Front-Ends bringen, die kohärent und gleichzeitig unterschiedliche Frequenzbereiche des Sendechirps aussenden:

TX1 sendet das erste Drittel des Chirps: -B/2 < f < -B/6
TX2 sendet das zweite Drittel des Chirps: -B/6 < f < B/6
TX3 sendet das dritte Drittel des Chirps: B/6 < f < B/2

Durch die Gleichzeitigkeit des Aussendens kann die dreifache Sendeenergie innerhalb der gegebenen Puls-dauer $τ_p$ abgestrahlt werden. Deshalb fällt die Spitzenleistungsanforderung bei einem einzelnen Sendemodul auf ein Drittel des nominellen Gesamtwerts (siehe obige Tabelle). Beim Verarbeiten können die Datenströme durch digitale Frequenzfilter getrennt werden.

Das Prinzip, die Signalbandbreite auf mehrere gleichzeitig sendende Module zu verteilen, ist besonders interessant, wenn für unterschiedliche Radar-Ausrichtungen, unterschiedliche Keulenbreiten benötigt werden: In far range wird die gesamte Sende-Apertur für einen Chirp voller Bandbreite benutzt. In near range wird eine wesentlich breitere Keule benötigt, die zweckmäßig mit einer kleinen Apertur erzeugt wird (nur Phasen gesteuerte Beam-Aufweitung ist nicht effektiv); Nicht verwenden von Antennen-Teilen bedeutet aber nicht nur geringeren Antennengewinn, sondern noch zusätzlich reduzierte Pulsleistung. Dies wird durch das beschriebene Verfahren vermieden.

Wie bereits oben erläutert werden bei der Erfindung mehrere unabhängige Antennenkeulen dazu verwendet, die Echos, die von den einzelnen Pulsen bzw. Impulssignalen zurückkommen, separat zu empfangen und abzuspeichern. So genannte Range Ambiguities, also sozusagen ein Übersprechen von einer Keule auf eine benachbarte Keule, entstehen dann, wenn die empfangenden Keulen nicht gut genug getrennt werden. In einem derartigen Fall empfängt eine Keule nicht nur die Echos seines Pulses, sondern auch - mit reduzierter Amplitude - die Echos der Impulse der Nachbarkeulen.

Daher sollte auf die Ausprägung einer Antennenkeule in Elevation mit hinreichend niedrigen Nebenkeulen geachtet werden. Beim Instrument (B) oder (C) von Fig. 1 geschieht dies beim Digital Beam Forming (DBF) in der digitalen Domäne. Besonders wichtig ist dies beim Instrument (C) aufgrund der kleineren PRI und der daher am abzutastenden Objekt näher beieinander liegenden Echozentren. Beim DBF werden die einzelnen Signale der Subaperturen, d.h. die Signale der TX-Antennen RX1 bis RX17 mit geeigneten insbesondere zeitabhängigen komplexen Gewichtsfaktoren versehen. Da der genaue Ort der Nachbarpulse bekannt ist, lassen sich sehr gezielt Nullen an die entsprechenden Stellen der von den Subaperturen erzeugten Antennenpattern legen.

Eine noch wirkungsvollere Methode des Unterdrückens von Range Ambiguities besteht im STAP (Space-Time Adaptive Processing). Das STAP ist in dem Buch "Space-Time Adaptive Processing" von R.Klemm, IEE Radar, Sonar, Navigation and Avionics Series 9, 1998, ISBN 0 85296 946 5, ausführlich beschrieben. Beim STAP, das zur Clusterunterdrückung bei der Detektion von Bewegtzielen aus SAR-Rohdaten eingesetzt wird, werden Nullen nicht nur wie bei der Antennenpatternadaption im räumlichen (Winkel-) Bereich (wie oben erläutert) gesetzt, sondern im kombinierten Raum-Zeitbereich der Signale. Die höhere Dimensionalität dieses Signalraums und die Verwendung eines optimalen Prozessors führen bei STAP immer zu mindestens ebenso guten, i.A. aber zu besseren Filterergebnissen wie bei der bloßen Patternadaption. Das physikalische Prinzip, das hinter der Unterdrückung ("Filterung") unerwünschter Signale steht, besteht in der kombinierten Charakterisierung des Signals im Zeit- und Ortsbereich; letzteres heißt in der Feststellung der Winkelrichtung, aus der das Signal in das Front-End einläuft. Hierzu ist ein Multiapertur-Front-End wie beim HRWS-SAR die unerlässliche Voraussetzung. Die mit diesem Verfahren erreichbare Trennschärfe wächst mit der Gesamthöhe der RX-Antenne und der Zahl der ihrer Subaperturen an.

Im Folgenden wird die Möglichkeit der Datenreduktion gemäß der Erfindung erläutert. Ohne Datenreduktion müssen die Rohsignale von allen 17 Elevationsaperturen RX1-RX17 zwischengespeichert und später an einen zentralen SAR-Prozessor zur Auswertung übermittelt werden. Während beim Instrument (B) maximal 5280 Range Lines pro Sekunde anfallen, sind dies beim erfindungsgemäßen Instrument (C) so viele wie der mittleren Pulsfrequenz entspricht. Eine effiziente Datenreduktion ist insbesondere dann möglich, wenn das DBF bereits bordseitig, d.h. im Instrument mit der Antenne, beispielsweise einem SAR-Satelliten durchgeführt wird. Auf diese Weise werden pro Puls 17 aperturspezifische Range Lines in K Strahl-spezifische Range Lines überführt (z.B. K=5).

Als zweiter Schritt einer bordseitigen Datenreduktion können von den Strahlspezifischen Range Lines diejenigen Teile eliminiert werden, wo in einer Azimutspalte pro K Pulse mehr als M Samples vorliegen. In Fig. 6 sind dies beispielsweise unter Vernachlässigung der Pulslänge Range Line Bereiche hinter dem ersten dargestellten Bereich, da dort jeweils 5 Samples in Azimut gegenüber nur 4 Samples in der ersten Spalte im Speicher verfügbar sind. Das fünfte Sample ist für die Azimutprozessierung nicht erforderlich und muss daher nicht an einen zentralen SAR-Prozessor übermittelt werden. Besondere Bedeutung besitzt dieser zweite Schritt bei hoher mittlerer PRF.

Gemäß der Erfindung können mit ungleichförmiger PRI große Streifen bei gleichzeitig hoher Auflösung wie mit einem HRWS-SAR aufgenommen werden. Dabei ist jedoch die Antenne gemäß der Erfindung wesentlich kleiner, beispielsweise wenigstens dreimal als die Antenne des bekannten HRWS-SAR. Weiterhin gibt es aufgrund der kleineren Antenne weniger Back-Ends als beim HRWS-SAR. Dafür sind die Anforderungen an die Sendeleistung höher. Mit der Erfindung kann ferner eine SNR-Performance wie bei einem herkömmlichen monostatischen SAR erzielt werden. Durch die ungleichförmige PRI kann das Auftreten von schwarzen Streifen im späteren SAR-Bild vermieden werden. Durch Variierung der ungleichförmigen PRI kann ein auf der Erfindung basierendes SAR optimal an eine bestimmte Mission angepasst werden.

Die bei der Erfindung vergrößerte Gesamtapertur in Elevation und die mehrfachen Subaperturen der Empfangsantenne bieten folgende Vorteile:

1. Bei großer Streifenbreite wird der Empfangsantennengewinn erhöht.
2. Die Empfangsantennenkeule sowie deren Frequenzspreizung kann dynamisch nachgeführt werden.
3. Range Ambiguities können unterdrückt werden.
4. Mehrere Empfangskeulen können bei hoher PRF generiert werden.

Schließlich sei angemerkt, dass die Zahl und Größe der Subaperturen der Empfangsantenne gemäß der Erfindung je nach Einsatzzweck angepasst werden können.

Insgesamt werden mit der Erfindung die wesentlichen Funktionen eines HRWS-SAR erzielt ohne eine PRF-Reduktion und mit einer wesentlich kleineren Antenne.

Als weitere Ausführungsform offenbart die Erfindung eine hochauflösende Synthetik-Apertur-Radarvorrichtung, welche mindestens zwei Sendeantennen zum Erzeugen von Radarstrahlen zum Abtasten eines Objekts umfasst, wobei die mindestens zwei Sendeantennen gleichzeitig im Frequenzmultiplex betrieben werden.

Bei Synthetik-Apertur-Radaren ist eine Steigerung der Sendeleistung der Sendeantenne oftmals notwendig oder wünschenswert. Gleichzeitig liegt die Apertur (Höhe und Breite) der Sendeantenne aber aus systematischen Gründen fest.

Bei passiven Antennen, deren Sendeleistung proportional zur Pulsleistung des eingespeisten HF-Signals anwächst, können gesteigerte Leistungen prinzipiell durch Parallelisierung von Leistungsverstärkern realisiert werden.

Dies birgt aber insbesondere bei Weltraumanwendungen große Risiken: Bei Röhren-Verstärkern mit mehreren kW Pulsleistung besteht z.B. die Gefahr von Hoch-Energie-Effekten wie Multipaction. Bei Halbleiterverstärkern gibt es zum einen technologische Beschränkungen, zum anderen kann die Erhöhung der Verstärkerdichte, d.h. der Anzahl von Verstärkern pro Fläche, zu ernsten thermischen Problemen führen.

Die Verwendung von hinreichend vergrößerten aktiven Antennen, deren Sendeleistung proportional zur Antennenfläche anwächst, ohne Hochleistungsverstärker zu benötigen, führt nicht zur Lösung, weil regelmäßig unter Systemaspekten eine bestimmte Antennenapertur - und folglich Antennenfläche - nicht überschritten werden darf.

Die vorliegende Erfindung löst das Problem durch den parallelen Betrieb mehrerer geometrisch gleicher Sendeantennen der gewünschten Apertur, freilich im Frequenzmultiplex. Es sei z.B. ein Chirp der Bandbreite B und Pulsdauer $\tau_p$ zu senden. Jede der Sendeantennen (hier: drei Sendeantennen TX1, TX2, TX3) sendet kohärent und gleichzeitig unterschiedliche Frequenzbereiche des Sendechirps aus:

TX1 sendet das erste Drittel des Chirps: -B/2 < f < -B/6

TX2 sendet das zweite Drittel des Chirps: -B/6 < f < B/6

TX3 sendet das dritte Drittel des Chirps: B/6 < f < B/2

Durch die Gleichzeitigkeit des Aussendens kann im Beispiel die dreifache Sendeenergie innerhalb der gegebenen Pulsdauer $\tau_p$ abgestrahlt werden, ohne eine Leistungssteigerung der einzelnen Antenne erforderlich zu machen. Die zu schwache Einzelantenne muß also lediglich baugleich reproduziert und mit einem anderen Signal gespeist werden. Dabei reduziert sich sogar deren Bandbreitenanforderung.

Die beschriebene Erfindung kann aber nicht nur dazu dienen, bei unveränderter Apertur die Systemsendeleistung zu steigern. Das Verfahren erlaubt allgemein eine Entkopplung von Sendeleistung und Aperturgröße bei aktiven Antennen. Umkehrt kann auch eine Apertur ausreichender Sendeleistung in mehrere Subaperturen und zugehörige Sendemodule aufgeteilt werden, um die gesamte Sendeleistung mit der verkleinerten Apertur zu realisieren. Das Prinzip, die Signalbandbreite auf mehrere gleichzeitig sendende Module zu verteilen, ist besonders interessant, wenn für unterschiedliche Radar-Ausrichtungen ein und desselben Instrumentes unterschiedliche Keulenbreiten benötigt werden: In far range wird die gesamte Sende-Apertur für einen Chirp voller Bandbreite benutzt. In near range wird eine wesentlich breitere Keule benötigt, die zweckmäßig mit einer kleinen Apertur erzeugt wird. Eine phasengesteuerte Beam-Aufweitung wäre nicht hinreichend effektiv; und das Abschalten von Antennen-Teilflächen würde reduzierte Pulsleistung bedeuten. Dies wird durch das beschriebene Verfahren vermieden.

Beim Verarbeiten der empfangenen Radarechos müssen die Signale bei der vorliegenden Erfindung durch analoge oder digitale Frequenzfilter wieder getrennt werden.

Die in der Beschreibung genannten konkreten Zahlen für Betriebsparameter sind nur beispielhaft genannt; die Offenbarung der Erfindung ist nicht darauf beschränkt.

**Bezugszeichen**

| 10 | Hochauflösende Synthetik-Apertur-Radarvorrichtung |
|---|---|
| 12 | Erdoberfläche |
| 14 | Empfangsantenne der SAR-Vorrichtung 10 |
| 16 | Radarstrahl |
| 18 | Impulssignale des Radarstrahls 16 |
| 20, 22, 24 | gleichzeitig ausgesandte Radarstrahlen |
| 26 | Tor |

**Patentansprüche**

1. Hochauflösende Synthetik-Apertur-Radarvorrichtung (10) umfassend
zwei oder mehr Sendeantennen (TX1-TX3) zum Erzeugen von Radarstrahlen (16) zum Abtasten eines Objekts (12), eine Empfangsantenne (14) zum Empfangen von an dem Objekt (12) reflektierten Radarstrahlen (20, 22, 24), die mehrere in Elevation angeordnete Subaperturen (RX1-RX17) aufweist, die weniger als drei Azimutaperturen bilden, wobei
die hochauflösende Synthetik-Apertur-Radarvorrichtung derart ausgebildet ist, dass Impulssignale (18) der Radarstrahlen (16) in ungleichmäßigen Zeitabständen derart ausgesendet werden, dass Datenlücken beim Abtasten nicht stets an derselben Stelle auftreten und nur zu lokalen rekonstruierbaren Fehlstellen in den Abtastungen führen, und wobei
die hochauflösende Synthetik-Apertur-Radarvorrichtung ferner derart ausgebildet ist, dass für eine Verarbeitung von empfangenen Radarechos (20, 22, 24) in Azimut ein Resampling-Verfahren zur Rekonstruktion der lokalen Fehlstellen in den Abtastungen eingesetzt wird.

2. Hochauflösende Synthetik-Apertur-Radarvorrichtung nach Anspruch 1, **dadurch gekennzeichnet, dass** sie ferner derart ausgebildet ist, dass mindestens zwei Sendeantennen (TX1-TX3) gleichzeitig im Frequenzmultiplex betrieben werden.

3. Hochauflösende Synthetik-Apertur-Radarvorrichtung nach einem der vorhergehenden Ansprüche, **dadurch gekennzeichnet, dass** sie ferner ausgebildet ist, um mittels Digital Beam Forming je einen Empfangskanal für jedes der Radarechos (20, 22, 24) bereitzustellen.

4. Hochauflösende Synthetik-Apertur-Radarvorrichtung nach Anspruch 3, **dadurch gekennzeichnet, dass** sie ausgebildet ist, um ein empfangenes Radarecho (20) von benachbarten empfangenen Radarechos (22, 24) streng zu trennen, indem die Signale der Subaperturen (RX1-RX17) in der digitalen Domäne mit zeitabhängigen komplexen Gewichtsfaktoren versehen werden.

5. Hochauflösende Synthetik-Apertur-Radarvorrichtung nach Anspruch 4, **dadurch gekennzeichnet, dass** die zeitabhängigen komplexen Gewichtsfaktoren so ausgebildet sind, dass ein Antennendiagramm (20) in die Richtungen von benachbarten empfangenen Radarechos (22,24) eine Null erhält.

6. Hochauflösende Synthetik-Apertur-Radarvorrichtung nach einem der Ansprüche 3 bis 5, **dadurch gekennzeichnet, dass** sie weiterhin derart ausgebildet ist, um ein Space-Time Adaptive Processing der Signale der Subaperturen (RX1-RX17) durchzuführen.

7. Hochauflösende Synthetik-Apertur-Radarvorrichtung nach einem der vorhergehenden Ansprüche, **dadurch gekennzeichnet, dass** sie ferner ausgebildet ist, um die aus den empfangenen Radarechos (20, 22, 24) gewonnenen Daten vor Übertragung an eine Bodenstation zu komprimieren.

8. Hochauflösende Synthetik-Apertur-Radarvorrichtung nach einem der vorhergehenden Ansprüche, **dadurch gekennzeichnet, dass** sie für jede Sendeantenne (Tx1-TX3) jeweils ein Sendemodul und Front-End zum Erzeugen eines Antennenpatterns und Aussenden eines Radarpulses aufweist.

9. Hochauflösende Synthetik-Apertur-Radarvorrichtung nach Anspruch 8, **dadurch gekennzeichnet, dass** die Sendemodule und Front-Ends ausgebildet sind, um kohärent und gleichzeitig Sendechirps auszusenden, wobei jedes Sendemodul und Front-End ausgebildet ist, um jeweils in einem anderen Frequenzbereich auszusenden.

10. Hochauflösende Synthetik-Apertur-Radarvorrichtung nach Anspruch 9, **dadurch gekennzeichnet, dass** sie digitale Frequenzfilter aufweist, die vorgesehen sind, um die aus empfangenen Radarstrahlen (20, 22, 24) erzeugten Datenströme frequenzmäßig zu trennen.


**Claims**

1. A high-resolution synthetic aperture radar device (10) comprising
two or more transmitting antennas (TX1-TX3) for generating radar beams (16) for sampling of an object (12),
a receiving antenna (14) for receiving, from the object (12), reflected radar beams (20, 22, 24), which receiving antenna has a plurality of sub-apertures (RX1-RX17) arranged in elevation, which form less than 3 azimuth apertures, wherein
the high-resolution synthetic aperture radar device is adapted such that impulse signals (18) of the radar beams (16) are transmitted in irregular time intervals such that data gaps do not always occur on the same position when sampling and only lead to local reconstructable errors in the samples, and wherein
the high-resolution synthetic aperture radar device is further adapted such that a resampling method for reconstruction of the local errors in the samples is used for a processing the received radar echoes (20, 22, 24) in azimuth.

2. A high-resolution synthetic aperture radar device according to claim 1, **characterized in that** the high-resolution synthetic aperture radar device is further adapted such that at least two transmitting antennas (TX1-TX3) are operated simultaneously in frequency multiplex.

3. A high-resolution synthetic aperture radar device according to any one of the foregoing claims, **characterized in that** the high-resolution synthetic aperture radar device is further adapted to provide a respective receiving channel for each of the radar echoes (20, 22, 24) by means of digital beam forming.

4. A high-resolution synthetic aperture radar device according to claim 3, **characterized in that** the high-resolution synthetic aperture radar device is adapted to strictly separate a received radar echo (20) from adjacent received radar echoes (22, 24) by providing the signals of the sub-apertures (RX1-RX17) in the digital domain with time depending complex weighting factors.

5. A high-resolution synthetic aperture radar device according to claim 4, **characterized in that** the time depending complex weighting factors are adapted such that an antenna diagram (20) obtains a zero in the directions of adjacent received radar echoes (22, 24).

6. A high-resolution synthetic aperture radar device according to any one of claims 3 to 5, **characterized in that** the high-resolution synthetic aperture radar device is further adapted to perform a space time adaptive processing of the signals of the sub-apertures (RX1-RX17).

7. A high-resolution synthetic aperture radar device according to any one of the foregoing claims, **characterized in that** the high-resolution synthetic aperture radar device is further adapted to compress the data obtained from the received radar echoes (20, 22, 24) before transmission to a ground station.

8. A high-resolution synthetic aperture radar device according to any one of the foregoing claims, **characterized in that** the high-resolution synthetic aperture radar device has a respective transmitting module and front-end for each transmitting antenna (TX1-TX3) for generating an antenna pattern and transmitting a radar pulse.

9. A high-resolution synthetic aperture radar device according to claim 8, **characterized in that** the transmitting modules and the front-ends are adapted to coherently and simultaneously transmit transmitting chirps, wherein each transmitting module and front-and is adapted to respectively transmit in a different frequency range.

10. A high-resolution synthetic aperture radar device according to claim 9, **characterized in that** the high-resolution synthetic aperture radar device has digital frequency filters, which are provided to separate, in frequency, data streams generated from received radar beams (20, 22, 24).

**Revendications**

1. Dispositif radar à synthèse d'ouverture à haute résolution (10), comprenant
   deux ou plusieurs antennes émettrices (TX1-TX3) servant à produire des faisceaux radar (16) destinés au balayage d'un objet (12),
   une antenne réceptrice (14) servant à recevoir les faisceaux radar (20, 22, 24) réfléchis sur l'objet (12) et présentant plusieurs sous-ouvertures (RX1-RX17) lesquelles sont disposées en élévation et forment moins que trois ouvertures azimutales,
   ce dispositif radar à synthèse d'ouverture à haute résolution étant conçu de telle façon que les signaux d'impulsion (18) des faisceaux radar (16) sont émis à des intervalles de temps irréguliers de sorte que les lacunes de données générées pendant le balayage n'apparaissent pas toujours au même endroit et n'entraînent pendant le balayage que des lacunes locales pouvant être reconstituées ultérieurement, et
   ce dispositif radar à synthèse d'ouverture à haute résolution étant en outre conçu de telle façon qu'un processus de ré-échantillonnage est utilisé pour la reconstitution des lacunes locales de balayage en vue du traitement des échos radars (20, 22, 24) reçus en azimut.

2. Dispositif radar à synthèse d'ouverture à haute résolution selon la revendication 1, **caractérisé en ce que**

ledit dispositif est en outre conçu de telle façon qu'au moins deux antennes émettrices (TX1-TX3) fonctionnent simultanément en mode de multiplexage fréquentiel.

**3.** Dispositif radar à synthèse d'ouverture à haute résolution selon l'une des revendications précédentes, **caractérisé en ce que**
ledit dispositif est en outre conçu pour fournir au moyen de la technique numérique de formation de faisceaux (Digital Beam Forming) un canal de réception pour chacun des échos radar (20, 22, 24).

**4.** Dispositif radar à synthèse d'ouverture à haute résolution selon la revendication 3, **caractérisé en ce que**
ledit dispositif est conçu pour strictement séparer un écho radar (20) reçu des échos radar (22, 24) voisins reçus en associant aux signaux des sous-ouvertures (RX1-RX17), dans le domaine numérique, des facteurs de pondération complexes dépendants du temps.

**5.** Radar à synthèse d'ouverture selon la revendication 4,
**caractérisé en ce que**
les facteurs de pondération complexes dépendants du temps sont conçus de manière à ce qu'il est associé au diagramme d'antenne (20) la pondération zéro, dans les directions des échos radar (22, 24) voisins reçus.

**6.** Dispositif radar à synthèse d'ouverture à haute résolution selon l'une des revendications 3 à 5, **caractérisé en ce que**
ledit dispositif est de plus conçu pour procéder à un traitement adaptatif espace-temps des signaux des sous-ouvertures (RX1-RX17).

**7.** Dispositif radar à synthèse d'ouverture à haute résolution selon l'une des revendications précédentes, **caractérisé en ce que**
ledit dispositif est de plus conçu pour comprimer avant leur transmission à la station au sol les données obtenues à partir des échos radar (20, 22, 24) reçus.

**8.** Dispositif radar à synthèse d'ouverture à haute résolution selon l'une des revendications précédentes, **caractérisé en ce que**
ledit dispositif présente pour chaque antenne émettrice (TX1-TX3) respectivement un module émetteur et un frontal pour générer un diagramme d'antenne et émettre une impulsion radar.

**9.** Dispositif radar à synthèse d'ouverture à haute résolution selon la revendication 8, **caractérisé en ce que**
les modules émetteurs et les frontaux sont conçus pour émettre de manière cohérente et simultanée des chirps d'émission, chaque module émetteur et chaque frontal étant conçus pour respectivement émettre dans une autre plage de fréquence.

**10.** Dispositif radar à synthèse d'ouverture à haute résolution selon la revendication 9, **caractérisé en ce que**
ledit dispositif présente des filtres de fréquence numériques servant à filtrer en fréquence les flux de données obtenus à partir des faisceaux radar (20, 22, 24) reçus.

4 m

0.59 m

TX4 RX

Instrument (A)

RX1  0.21 m  RX18  RX35

TX

1.66 m

12 m

Instrument (B)

RX17  RX34  RX51

4 m

0.63 m

TX1
TX2
TX3

RX1

14

1.66 m

RX17

Instrument (C)

Elevation

Azimut

FIG.1

EP 1 966 630 B1

FIG.2

FIG.3

FIG. 4

**FIG.5**

10

14

TX
Phasenzentrum
(TX phase
cenlor)

Elevation

Radialvektor (radius vector)

direktion of beam 4
direktion of beam 5
direktion of beam 1
direktion of beam 2
direktion of beam 3

6 7 8 9 10 6 7 8 9 10

12

Boden (ground plane)

Streifenbreite
(swath width)

EP 1 966 630 B1

FIG. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1241487 A1
- EP 1134592 A1
- DE 19929143 A1


**In der Beschreibung aufgeführte Nicht-Patentliteratur**

- **LEGG J A et al.** A SAR moving target ambiguity function'' FOURTH INTERNATIONAL SYMPOSIUM ON SIGNAL PROCESSING AND ITS APPLICATIONS. ISSPA 96. *PROCEEDINGS MAIN SYMPOSIUM QUEENSLAND UNIV. TECHNOL BRISBANE, QLD., AUSTRALIA,* 1996, vol. 2, ISBN 1-86435-210-8, 841-844
- Multiple-input multiple-output (MIMO) radar and imaging; degrees of freedom and resolution. **BLISS D W et al.** CONFERENCE RECORD OF THE 37TH. ASILOMAR CONFERENCE ON SIGNALS, SYSTEMS, & COMPUTERS. PACIFIC GROOVE, CA. IEEE, 09. November 2003, vol. 1 OF 2, 54-59
- THE SIR-C/X-SAR SYNTHETIC APERTURE RADAR SYSTEM. **JORDAN R L et al.** PROCEEDINGS OF THE IEEE. IEEE, 01. Juni 1991, vol. 79, 827-838
- A multichannel spaceborne radar for the COSMO-skymed satellite constellation. **LOMBARDO P.** AEROSPACE CONFERENCE, 2004. PROCEEDINGS. 2004 IEEE BIG SKY, MT, USA. IEEE, 06. Marz 2004, 111-119
- **G. KRIEGER ; N. GEBERT ; A. MOREIRA.** Unambiguous SAR Signal Reconstruction from Nonuniform Displaced Phase Center Sampling. *IEEE Geoscience and Remote Sensing Letters,* Oktober 2004, vol. 1 (4
- Space-Time Adaptive Processing. **R.KLEMM.** IEE Radar, Sonar, Navigation and Avionics Series 9. 1998